# EUROPÄISCHE PATENTSCHRIFT

(11) **EP 0 733 539 B1**
(45) Veröffentlichungstag und Bekanntmachung des Hinweises auf die Patenterteilung: **07.01.1998**
(21) Anmeldenummer: 95104194.6
(22) Anmeldetag: 22.03.1995
(51) Int. Cl.: B62D 25/04, B62D 29/00, B21D 26/02

(54) **Hohlprofil für eine Trägerstruktur eines Kraftfahrzeuges**
Hollow beam for a structural frame of a motor vehicle
Profilé creux pour structure porteuse de véhicule à moteur

(43) Veröffentlichungstag der Anmeldung: 25.09.1996
(73) Patentinhaber: Dr.Ing.h.c. F. Porsche Aktiengesellschaft, 70435 Stuttgart (DE); REGIE NATIONALE DES USINES RENAULT S.A., 92109 Boulogne Billancourt Cédex (FR)
(72) Erfinder: Vlahovic, Josip, D-74321 Bietigheim-Bissingen (DE)

(56) Entgegenhaltungen:
- DE-A- 4 139 305
- DE-C- 4 214 557
- US-A- 4 826 238

## Beschreibung

Die Erfindung betrifft ein Verfahren zur Herstellung eines Hohlprofils für eine Trägerstruktur eines Kraftfahrzeuges, wobei das Hohlprofil zumindest eine Zwischenwand aufweist, und ein als Hohlprofil mit Innenstegen ausgebildetes Ausgangsteil, insbesondere für dieses Verfahren.

Aus der US-A-4,826,238 geht ein Hohlprofil für eine Trägerstruktur eines Kraftfahrzeuges hervor, wobei das Hohlprofil eine geradlinige, aufrecht verlaufende Zwischenwand aufweist. Das im Strangpreßverfahren hergestellte Hohlprofil weist über seine gesamte Längserstreckung einen gleichbleibenden Querschnitt auf.

Die DE 42 14 557 C2 offenbart ein Verfahren zur Herstellung eines Hohlprofils für eine Trägerstruktur eines Kraftfahrzeuges, wobei das Hohlprofil durch hydraulisches Aufweiten eines vorprofiliertes Ausgangsteiles gebildet wird. Dieses Hohlprofil weist keine Zwischenwand auf.

Nachteilig an diesem bekannten Hohlprofil ist, daß es eine konstante Wanddicke aufweist. Stellen, an denen später Bauteile, wie z.B. Türscharniere, Schloßbolzen oder Gurtbefestigungen anzubringen sind, müssen mit Verstärkungen versehen werden. Das nachträgliche Anbringen von Verstärkungen ist kostenintensiv und arbeitsaufwendig.

Die DE-OS 41 39 305 beschreibt eine Fahrzeug-Türsäule bestehend aus einem Mehrkammer-Strangpreßprofil.

Nachteilig an diesem Mehrkammer-Strangpreßprofil ist, daß dieses nur in gerader, sich längserstreckender Form ausführbar ist und somit den heutigen Anforderungen hinsichtlich den erforderlichen komplizierten Längs- und Querschnittsformen nicht genügen.

Aufgabe der Erfindung ist es, ein Verfahren zur Herstellung eines Hohlprofils für eine Trägerstruktur eines Kraftfahrzeuges und ein Ausgangsteil zu schaffen, mit denen in Längsrichtung des Hohlprofils unterschiedliche Querschnitte realisierbar sind, wobei das Hohlprofil im Bereich von Anbauteilen wie Türscharniere, Schloßbolzen oder Gurtbefestigungen, eine ausreichende Festigkeit aufweist, ohne daß hierzu nachträgliche Verstärkungen vorgesehen werden müssen.

Erfindungsgemäß wird diese Aufgabe durch die Merkmale von Patentanspruch 1 beziehungsweise 3 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Anordnung von zumindest einer innenliegenden Zwischenwand im Hohlprofil, die beim Aufweiten von zumindest einem profilierten Innensteg des Ausgangsteils gebildet wird, ein Mehrkammer-Hohlprofil geschaffen wird, das in einem Arbeitsgang, entsprechend der erforderlichen Form, kostengünstig und einfach herstellbar ist und insbesondere im Bereich von Anbauteilen eine funktionsgerechte Festigkeit aufweist.

An Hohlprofile für Karosserierahmen werden hinsichtlich der mechanischen Festigkeit zweierlei Anforderungen gestellt. Diese bestehen darin, daß die Hohlprofile einerseits eine Aufgabe als Bauteil einer Trägerstruktur zu erfüllen haben, andererseits örtlich ausreichend Festigkeit für Bauteile wie z.B. Türscharniere, Schloßbolzen oder Gurtbefestigungen aufweisen müssen. Hierfür ist dann eine lokale Verstärkung des Profils erforderlich. Eine Ausführung des gesamten Hohlprofils in verstärkter Wanddicke, um der nur örtlich erforderlichen mechanischen Festigkeit nachzukommen, würde zu einer unnötigen Gewichtserhöhung führen.

Mehrkammerprofile erfüllen zwar die Anforderungen der mechanischen Festigkeit, jedoch ist deren Anpassung an die erforderlich Form begrenzt. Bislang fanden meist nur geradlinige oder leicht gekrümmte Mehrkammer-Hohlprofile Anwendung.

Deshalb sieht die Erfindung vor, ein Hohlprofil als Mehrkammerprofil im Innenhochdruck-Umformverfahren derart auzubilden, daß es zumindest eine innenliegende, annähernd geradlinige Zwischenwand aufweist. Dies wird erreicht, indem das Ausgangsteil im Inneren einen profilierten Innensteg aufweist, der beim hydraulischen Aufweiten in eine etwa gestreckte Lage überführbar ist und somit eine innere Kammerwand bildet. Der profilierte Innensteg ist im Ausgangsteil derart ausgebildet, daß zwei an den Außenwänden annähernd vertikal angebrachte Teilabschnitte durch einen geformten Teilabschnitt einstückig verbunden sind. Das geformte Teilstück kann schlangen-, V-, U-, wellrohr-, zickzack-, halbkreis-förmig oder dergleichen ausgebildet sein. Wesentlich ist, daß die Länge des profilierten Innenstegs der Länge der gestreckten Zwischenwand im Hohlprofil entspricht.

Sollte ergänzend zu einem Mehrkammerprofil eine weitere, lokale Verstärkung für die Befestigung von Bauteilen er forderlich sein, so kann die Wandstärke des Ausgangsprofils lokal derart verstärkt gewählt werden, daß das im Innenhochdruck-Umformverfahren hergestellte Hohlprofil an der erforderlichen Stelle die nötige, verstärkte Wanddicke aufweist.

Das vorzugsweise aus Leichtmetall (Aluminium oder eine Aluminiumlegierung) gefertigte Hohlprofil weist ein geringes Gewicht auf. Das Innenhochdruck-Umformverfahren ermöglicht, Hohlprofile mit unterschiedlichem Profil- und Querschnittsverlauf herzustellen.

Ausführungsbeispiele der Erfindung sind in den Zeichnungen dargestellt und werden im folgenden näher beschrieben.

Es zeigt
Fig. 1 ein typisches Hohlprofil wie z.B. eine B-Säule eines Kraftfahrzeuges,
Fig. 2 einen Schnitt nach der Linie II-II der Fig. 1 für ein erstes Querschnittsprofil eines Hohlprofils (gestrichelte Linien), Rohling (ausgezogene Linien),
Fig. 3 ein Werkzeug zur Herstellung eines Hohlprofils.

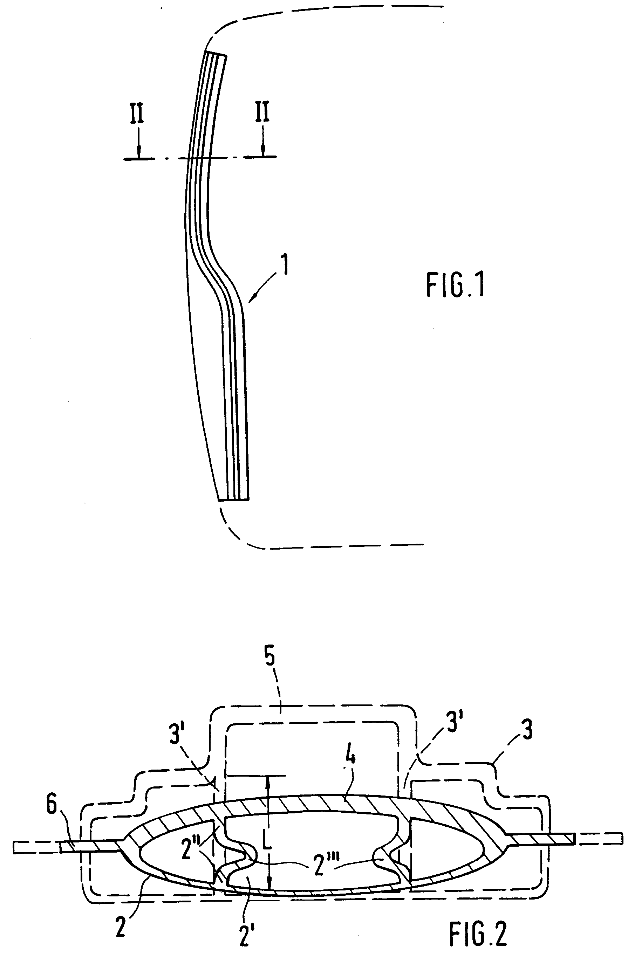

In Fig. 1 ist eine Türsäule 1 (B-Säule) für einen Fahrzeug-Rahmen eines Kraftfahrzeuges in Space-Frame-Bauweise gezeigt. Diese Türsäule 1 verläuft vertikal in verschiedenen Ebenen und weist z. B. ein Querschnittsprofil auf, wie es in Fig. 2 (gestrichelte Linien) dargestellt ist.

Fig. 2 zeigt einen Querschnitt eines Hohlprofils 3 mit Zwischenwänden 3' zur Verstärkung. Das ovale Ausgangsteil 2 (ausgezogene Linien) weist im Inneren zwei profilierte Innenstege 2' auf. Diese sind gebildet aus zunächst zwei, zu den Wänden annähernd vertikal stehenden Teilabschnitten 2'', denen dann diese Teilabschnitte 2'' verbindende, geformte Abschnitte 2''' folgen. Diese können schlangen-, V-, U-, wellrohr-, zickzack, halbkreisförmig oder dergleichen ausgebildet sein. Wesentlich ist, daß die Gesamtlänge, resultierend aus den Abschnitten 2'' und 2''' der Länge L der gestreckten Zwischenwand 3' entspricht, die nach dem hydraulischen Innenhochdruck-Umformen gebildet wird.

Durch diese Zwischenwände 3' wird die Biege- und Torsionsfestigkeit des Hohlprofils erheblich erhöht.

Das hydraulische Innenhochdruck-Umformverfahren ermöglicht Hohlprofile 3 mit den unterschiedlichsten Querschnittsprofilen herzustellen. Ebenso kann, je nach Wahl der Anzahl der profilierten Innenstege im Ausgangsprofil die Anzahl, Form und Lage der Kammern im Hohlprofil 3, nach Bedarf bestimmt werden.

Im Ausgangsteil 2 gegenüberliegend versetzt angeordnete profilierte Innenstege 2' führen im fertigen Hohlprofil 3 zu Zwischenwänden 3', die schräg zu den Außenwänden stehen. Beim Ausgangsteil 2 ist dann darauf zu achten, daß die an der Profilaußenwand liegende Teilstücke 2'' der Innenstege bereits einen entsprechenden Winkel zu den Innenwänden des Ausgangsteils aufweisen, damit beim hydraulischen Verformen eine Rißbildung vermieden wird.

Die Wanddicke des Ausgangsteils 2 kann im Bereich 4 verstärkt gewählt werden, so daß das im Innenhochdruck-Umformverfahren hergestellte Hohlprofil 3 an der Stellen 5 die erforderliche, verstärkte Wanddicke für die Befestigung von Bauteilen aufweist.

Bei ovalen Strangpreßprofilen als Ausgangsteil 2 hat sich gezeigt, daß eine Fixierung des Rohlings im Werk zeug 7 an seitlichen Stegen 6 die Präzision des Hohlprofils 3 erhöht, da eine unkontrollierte Lageänderung des Ausgangsteils 2 (Rohling) während der hydraulischen Innenhochdruck-Umformung vermieden wird. Deshalb ist das Strangpreßprofil 2 (Fig. 2) seitlich mit Stegen 6 versehen, die sowohl der Fixierung des Strangpreßprofils 2 im Werkzeug 7 dienen, als auch später als Halterung für Dichtungsprofile Verwendung finden können.

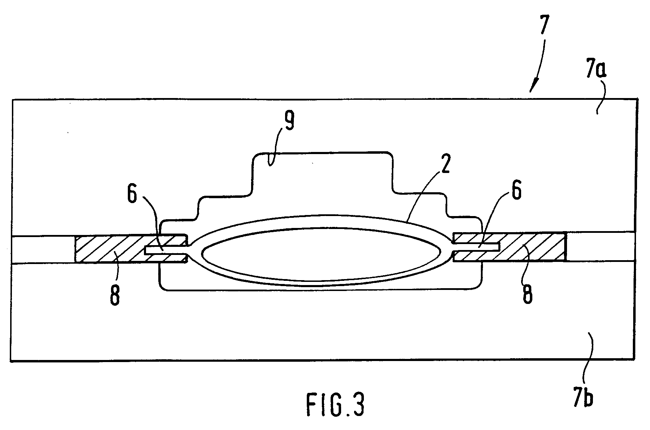

Fig. 3 zeigt ein Werkzeug 7 zur Herstellung des oben be schriebenen Hohlprofiles 3. Das in Längsrichtung gemäß Fig. 1 vorgeformte Ausgangsteil 2 (Strangpreßprofil) wird in die geteilte Form 7, bestehend aus Oberteil 7a und Unterteil 7b, eingelegt. Die seitlichen Stege 6 des Ausgangsteils 2 sind in Halter 8 zur exakten Fixierung eingeklemmt. Nach Verschließen der offenen Enden des Ausgangsteils 2 wird dieses hydraulisch derart aufgeweitet, daß es an der Innenkontur 9 des Werkzeuges 7 zur Anlage kommt.

### Liste der Bezugszeichen:

- 1: Türsäule
- 2: Ausgangsteil
- 2': profilierte Innenstege, gebildet aus 2'' und 2'''
- 2'': vertikal stehende Teilabschnitte
- 2''': geformte Abschnitte
- 3: Hohlprofil
- 3': Zwischenwände
- 4: Bereich der verstärkten Wanddicke im Ausgangsteil 2
- 5: Bereich der verstärkten Wanddicke im Hohlprofil 3
- 6: seitliche Stege
- 7: Werkzeug
- 7a: Werkzeug-Oberteil
- 7b: Werkzeug-Unterteil
- 8: Halter
- 9: Innenkontur Werkzeug

## Patentansprüche

1. Verfahren zur Herstellung eines Hohlprofils (3) für eine Trägerstruktur eines Kraftfahrzeuges, wobei das Hohlprofil (3) zumindest eine Zwischenwand (3') aufweist, **dadurch gekennzeichnet, daß** in einem als Strangpreßprofil ausgebildeten Ausgangsteil (2) ein oder mehrere vorprofilierte Innenstege (2') in ihrer Länge und Lage derart angeordnet werden, daß diese beim Aufweiten des Ausgangsteils (2) im Innenhochdruck-Umformverfahren in eine gestreckte Endstellung überführt werden, um die Zwischenwände (3') des Hohlprofils (3) zu bilden.

2. Verfahren nach Anspruch 1, **dadurch gekennzeichnet,** daß die Ansatzpunkte des oder der vor profilierten Innenstege (2') derart gewählt werden, daß das Hohlprofil (3) parallelliegende und/oder im Winkel zueinander liegende Zwischenwände (3') aufweist.

3. Als Hohlprofil mit einem oder mehreren Innenstegen (2') ausgebildetes Ausgangsteil (2), insbesondere für das Verfahren nach Anspruch 1, **dadurch gekennzeichnet,** daß sich der Innensteg (2') des Ausgangsteils (2) aus zwei endseitigen geradlinigen, zur Ausgangsteilinnenwand annähernd senkrecht stehenden Abschnitten (2'') und einem dazwischenliegenden geformten Abschnitt (2''') zusammensetzt, wobei der geformte Abschnitt (2''') seitlich versetzt zu den geradlinigen Abschnitten (2'') verläuft.

4. Ausgangsteil (2) nach Anspruch 3, **dadurch gekennzeichnet,** daß das Ausgangsteil (2) einen runden Querschnitt aufweist.

5. Ausgangsteil (2) nach Anspruch 3, **dadurch gekennzeichnet,** daß das Ausgangsteil (2) einen ovalen Querschnitt aufweist.

6. Ausgangsteil (2) nach Anspruch 3, **dadurch gekennzeichnet,** daß das Ausgangsteil (2) über den Querschnitt gesehen einen Bereich (4) mit verstärkter Wanddicke aufweist.

7. Ausgangsteil (2) nach Anspruch 3, **dadurch gekennzeichnet,** daß das Ausgangsteil (2) mit Stegen (6) für die Fixierung im Werkzeug (7) versehen ist.

8. Ausgangsteil (2) nach Anspruch 3, **dadurch gekennzeichnet,** daß das Ausgangsteil (2) ein aus Leichtmetall gefertigtes Strangpreßprofil ist.

## Claims

1. A method of producing a hollow section (3) for a support structure of a motor vehicle, the hollow section (3) being provided with at least one partition wall (3'), **characterized in that** one or more pre-shaped internal webs (2') are arranged in such a way in their length and position in an initial component (2) formed as an extruded section that during the widening of the initial component (2) in the internal high-pressure shaping process the said internal webs (2') are transferred into an extended end position so as to form the partition walls (3') of the hollow section (3).

2. A method according to Claim 1, **characterized in that** the attachment points of the preshaped internal web or webs (2') are selected in such a way that the hollow section (3) has partition walls (3') arranged parallel to one another an-or arranged at an angle to one another.

3. An initial component (2) constructed as a hollow section with one or more internal webs (2'), in particular for the method according to Claim 1, **characterized in that** the internal web (2') of the initial component (2) is formed by two straight end portions (2'') - arranged substantially at right angles to the inner wall of the initial component - and a shaped portion (2''') arranged therebetween, wherein the shaped portion (2''') extends laterally offset from the straight portions (2'').

4. An initial component (2) according to Claim 3, **characterized in that** the initial component (2) has a round cross-section.

5. An initial component (2) according to Claim 3, **characterized in that** the initial component (2) has an oval cross-section.

6. An initial component (2) according to Claim 3, **characterized in that** as viewed in cross-section the initial component (2) has an area (4) with an increased wall thickness.

7. An initial component (2) according to Claim 3, **characterized in that** the initial component (2) is provided with webs (6) for fixing in the tool (7).

8. An initial component (2) according to Claim 3, **characterized in that** the initial component (2) is an extruded profile produced from light metal.

## Revendications

1. Procédé de fabrication d'un profilé creux (3) destiné à une structure porteuse d'un véhicule automobile, le profil creux (3) présentant au moins une paroi intermédiaire (3') caractérisé en ce que, dans une partie initiale (2), réalisée sous la forme d'un profilé d'extrusion sont disposées des nervures intérieures (2') préprofilées, leur longueur et leur position étant telles qu'elles se transforment lors de l'agrandissement de la partie initiale (2) dans le procédé de formage se faisant sous pression intérieure élevée, en une position finale étirée afin de former les parois intermédiaires (3') du profilé creux (3).

2. Procédé selon la revendication 1, caractérisé en ce que les points racine de la ou des nervures profilées (2') sont choisies de manière que le profilé creux (3) présente des parois intermédiaires (3') placées parallèlement et/ou placées suivant un angle les une par rapport aux autres.

3. Profilé ceux comportant une partie initiale (2) réalisée avec une ou plusieurs nervures intérieures (2') en particulier pour le procédé selon la revendication 1, caractérisé en ce que la nervure intérieure (2') de la partie initiale (2) est constituée de deux sections (2'') situées côté extrémité, rectilignes, placées à peu près perpendiculairement par rapport à la paroi intérieure de la partie initiale, et d'une section (2'''), formée en un point intermédiaire, la section (2''') formée étant décalée latéralement par rapport aux sections (2'') rectilignes.

4. Partie initiale (2) selon la revendication 3, caractérisé en ce que la partie initiale (2) présente une section transversale ronde.

5. Partie initiale (2) selon la revendication 3, caractérisé en ce que la partie initiale (2) présente une section transversale ovale.

6. Partie initiale (2) selon la revendication 3, caractérisé en ce que la partie initiale (2) présente en observant sur la section transversale une zone (4) à épaisseur de paroi renforcée.

7. Partie initiale (2) selon la revendication 3, caractérisé en ce que la partie initiale (2) est pourvue de nervures (6) destinées à la fixation dans l'outil (7).

8. Partie initiale (2) selon la revendication 3, caractérisé en ce que la partie initiale (2) est une profilé d'extrusion fabriqué en métal léger.
